# EUROPÄISCHE PATENTSCHRIFT

(11) **EP 3 535 481 B1**
(45) Veröffentlichungstag und Bekanntmachung des Hinweises auf die Patenterteilung: **08.07.2020**
(21) Anmeldenummer: 17805109.0
(22) Anmeldetag: 07.11.2017
(51) Int. Cl.: F01K 23/10

(54) **KRAFTWERKSANLAGE MIT GASTURBINENANSAUGLUFTSYSTEM**
POWER PLANT WITH GAS TURBINE INTAKE AIR SYSTEM
CENTRALE ÉLECTRIQUE MUNIE D'UN SYSTÈME D'ADMISSION D'AIR DE LA TURBINE À GAZ

(30) Priorität: 22.12.2016 DE 102016225983
(43) Veröffentlichungstag der Anmeldung: 11.09.2019
(73) Patentinhaber: Siemens Aktiengesellschaft, 80333 München (DE)
(72) Erfinder: HAAS, Sebastian, 91301 Forchheim (DE); LOMANI, Johannes, 91080 Uttenreuth (DE); MORITZ, Kevin, 91058 Erlangen (DE)
(86) Internationale Anmeldenummer: PCT/EP2017/078407
(87) Internationale Veröffentlichungsnummer: WO 2018/114113

(56) Entgegenhaltungen:
- EP-A1- 0 523 467
- DE-A1- 19 745 272
- DE-A1-102013 219 166

## Beschreibung

Die Erfindung betrifft eine Kraftwerksanlage sowie ein Verfahren zur Effizienzoptimierung und Betriebsbereichserweiterung.

Gas- und Dampfturbinenanlagen, auch als Kombi-Kraftwerke bezeichnet, sollen neben dem für den Dauerbetrieb relevanten Grundlastzustand auch weitere Lastanforderungen erfüllen, alleine schon wegen des Startens und Anhaltens der Maschinen, aber insbesondere auch für sich ändernde Lastanforderungen im elektrischen Netz. Solche Anlagen sind von den Dokumenten DE102013219166 A1, DE19745272 A1 und EP0523467 A1 bekannt.

Prinzipiell kann die abgegebene Leistung der beteiligten Gasturbine über den Ansaugmassenstrom und die Turbineneintrittstemperatur beeinflusst werden. Zur Verringerung des Ansaugmassenstroms wird in Gasturbinen bei Teillasten eine Verdichtervorleitreihe (IGVs=inlet guide vanes) mit variablem Anstellwinkel entsprechend eingestellt, so dass die Zuströmung zur ersten Laufreihe zumindest eingeschränkt wird. Allerdings wird dabei auch der Wirkungsgrad deutlich reduziert. Mit bisher üblichen Systemen zur Ansaugluftvorwärmung wird der Wirkungsgrad nur leicht wieder angehoben. Eine weitere Erhöhung des Wirkungsgrades in Teillasten reduziert die Brennstoffkosten im Teillastbetrieb deutlich. Die Ansaugluftvorwärmung wird zudem eingesetzt, um Vereisung zu verhindern, die CO-Emissionen bei tiefer Teillast zu verringern, oder um bei maximaler Leistung und niedrigen Außenlufttemperaturen, was zu einer angedrosselten Verdichtervorleitreihe führen kann, den Wirkungsgrad zu verbessern.

Bisher wurde für die Ansaugluftvorwärmung meist höherwertige Wärme in Form von Dampf aus der Niederdruckstufe des Abhitzedampferzeugers bzw. Hilfskessels verwendet, in einem Wärmeübertrager (Wärmetauscher) kondensiert und dadurch ein Zwischenkreislauf mit typischer Weise einem Wasser/Glykol-Gemisch aufgewärmt, womit die kalte Ansaugluft der Gasturbine über einen weiteren Wärmetauscher vorgewärmt wurde. Diese Vorwärmung sorgt in Teillasten dafür, dass die Gasturbine weniger oder gar nicht gedrosselt gefahren werden kann und damit ein höherer Wirkungsgrad erreicht wird, was einen reduzierten Brennstoffverbrauch zur Folge hat. Die Schaltung ist hier einfacher und die Wirkungsgradoptimierung eingeschränkt. Begrenzend wirkt hier, dass die Wärmequelle Niederdruckdampf sowohl in der Dampfturbine als auch im System der AnsaugluftVorwärmung genutzt werden soll.

Um mehr Wärme für die Produktion von Niederdruckdampf bereitzustellen, konnte der Hochdruck-Vorwärmer-Bypass mit Einschalten der Ansaugluftvorwärmung auf eine feste Position, z.B. 60%, gefahren werden. Typischer Weise wurde die Ansaugluftvorwärmung zwecks Verbesserung des Teillastwirkungsgrades erst freigegeben, wenn der Blockleistungssollwert einen gewissen Wert, z.B. 70%, unterschritten hat.

Mit dem Füllstand im Kondensationswärmeübertrager konnte die Wärmetauscherfläche angepasst werden. Mit diesem Füllstand wurde die Ventilstellung des wasser-/glykolseitigen Dreiwegeventils, mit dem die Wasser-/ Glykol-Mischtemperatur vor Eintritt in den Luft-/Wasser-Wärmeübertrager geregelt wird, so eingestellt, dass stets wieder eine recht große Ventilöffnung (z.B. 60%) erreicht wird.

Ferner kann mit großen Rohrbündelwärmetauschern warmes Fernwärmewasser bzw. heißes Kondensat aus dem Kondensatvorwämer zur Verhinderung von Eisbildung in der Gasturbinen-Ansaugluft und zur Verbesserung der Kohlenmonoxidemission benutzt werden. Diese Systeme sind jedoch wenig flexibel und aufgrund von Baugröße der Wärmetauscher, Ausnutzung der Wärmequelle und der zugrundeliegenden Schaltung und Regelung auf eine vergleichsweise geringe Leistung begrenzt und können sehr kleine Leistungen nur schlecht regeln.

Generell haben derartige Anlagen in Bezug auf die übertragene Wärmeleistung einen sehr begrenzten Einsatzbereich und in Bezug auf die Regelbarkeit einen sehr engen Betriebsbereich bei Teillasten. Ferner ist die Schaltung der Wärmenutzung nicht ohne Weiteres auf andere Kraftwerkskonfigurationen übertragbar.

Aufgabe der Erfindung ist es, eine Kraftwerksanlage mit gegenüber dem Stand der Technik verbesserter Effizienz und erweitertem Betriebsbereich bereitzustellen. Eine weitere Aufgabe der Erfindung ist es, ein entsprechendes Verfahren zur Effizienzoptimierung und Betriebsbereichserweiterung anzugeben. Diese Aufgabe wird durch die Kraftwerksanlage des Anspruchs 1 und das entsprechende Verfahren des Anspruchs 13 gelöst.

Die Erfindung löst die auf eine Kraftwerksanlage gerichtete Aufgabe, indem sie vorsieht, dass bei einer derartigen Kraftwerksanlage umfassend eine Gasturbine, einen Abhitzedampferzeuger, sowie einen Zwischenkreislauf mit einem ersten Wärmeübertrager, der in einen Lufteinlass der Gasturbine geschaltet ist, und einem zweiten Wärmeübertrager, der in einen Kondensatkreislauf geschaltet ist, der einen Kondensatvorwärmer im Abhitzedampferzeuger umfasst, auf beiden Seiten des zweiten Wärmeübertragers ein erstes bzw. zweites Hochlastventil und dazu parallel ein erstes bzw. zweites Schwachlastventil für geringere Durchflüsse als durch das erste bzw. zweite Hochlastventil angeordnet sind.

Durch den Einsatz einer Schaltung mit Hoch- und Schwachlastregelventilen auf beiden Seiten des zweiten Wärmeübertragers, d.h. ein Paar bestehend aus einem Hoch- und einem Schwachlastventil auf der Primärseite und ein weiteres Paar auf der Sekundärseite, kann dieser trotz der Möglichkeit vergleichsweise hoher Durchflüsse (durch die Hochlastventile) auch bei vergleichsweise kleinen Wärmeleistungen ohne Gefahr von Ausdampfungen und Einfrierungen sicher betrieben werden. Die Ausführungsform mit zwei Paar Ventilen stellt natürlich nur ein Minimum dar. Gegebenenfalls können auch mehr Ventile zum Einsatz kommen. Wichtig ist, dass nur durch die Wahl von Ventilen für unterschiedliche Durchflussmengen eine genaue Einstellbarkeit der Durchflussmengen auf beiden Seiten des zweiten Wärmeübertragers (also Primär- und Sekundärseite) über einen weiten Bereich überhaupt erst möglich wird.

In einer vorteilhaften Ausführungsform umfasst der Kondensatkreislauf eine erste Rezirkulationsleitung, die einen Ausgang des Kondensatvorwärmers mit einem Eingang des Kondensatvorwärmers verbindet, wobei redundante Rezirkulationspumpen (d.h. zwei oder mehr) in der ersten Rezirkulationsleitung angeordnet sind und wobei eine erste Zweigleitung von der ersten Rezirkulationsleitung abzweigt und in den zweiten Wärmeübertrager mündet und eine zweite Zweigleitung den zweiten Wärmeübertrager mit dem Eingang des Kondensatvorwärmers verbindet. Durch die Nutzung einer Rezirkulation des Kondensataustritts kann der zweite Wärmeübertrager bei vergleichsweise kleinen Wärmeleistungen noch sicher betrieben werden und das Risiko von Ausdampfungen und Einfrierungen wird weiter vermindert. Die Wärmeübertragung wird nicht nur über die Zulauftemperatur sondern auch über den Durchfluss beeinflusst und kann somit besser eingestellt werden.

In einer weiteren vorteilhaften Ausführungsform zweigt die erste Zweigleitung in Strömungsrichtung nach den Rezirkulationspumpen von der ersten Rezirkulationsleitung ab. Dadurch können die Rezirkulationspumpen das Kondensat nicht nur durch die Rezirkulationsleitungen direkt zurück zum Eingang des Kondensatvorwärmers fördern, sondern auch zum zweiten Wärmeübertrager, so dass hierfür keine weiteren Pumpen notwendig sind.

Zweckmäßiger Weise sind in der ersten Zweigleitung das erste Hochlastventil und in einer ersten Umführungsleitung um das erste Hochlastventil das erste Schwachlastventil angeordnet.

In einer alternativen Ausführungsform sind in der zweiten Zweigleitung das erste Hochlastventil und in einer ersten Umführungsleitung um das erste Hochlastventil das erste Schwachlastventil angeordnet.

Neben der Rezirkulation von im Kondensatvorwärmer erwärmten Kondensat ist es für die Feineinstellung der Vorwärmung weiterhin vorteilhaft, wenn im zweiten Wärmeübertrager abgekühltes Kondensat ebenfalls rezirkuliert wird und zwar ohne oder zumindest nur mit eingeschränkter Aufwärmung im Kondensatvorwärmer. Zu diesem Zweck werden vier Alternativen vorgeschlagen.

Im ersten Fall kann von der zweiten Zweigleitung eine zweite Rezirkulationsleitung abzweigen, die in Strömungsrichtung eines Kondensats vor den redundanten Rezirkulationspumpen in die erste Rezirkulationsleitung mündet.

Im zweiten Fall kann, wenn die Hauptlast- und Schwachlastventile samt erster Umführungsleitung in der zweiten Zweigleitung angeordnet sind, von der ersten Umführungsleitung eine zweite Rezirkulationsleitung abzweigen, die auch in diesem zweiten Fall in Strömungsrichtung eines Kondensats vor den redundanten Rezirkulationspumpen in die erste Rezirkulationsleitung mündet.

Im dritten Fall zweigt eine dritte Rezirkulationsleitung von der zweiten Zweigleitung ab und mündet in die erste Zweigleitung. Hier muss allerdings eine Pumpe in die dritte Rezirkulationsleitung geschaltet sein.

Im vierten Fall weist der Kondensatvorwärmer mindestens zwei Heizflächen auf, von denen mindestens eine einen Bypass aufweist, d.h. insbesondere umführt der Bypass die in Strömungsrichtung eines Kondensats gesehen letzte der Heizflächen und mündet in die erste Rezirkulationsleitung, beispielsweise noch vor den Rezirkulationspumpen.

In einer vorteilhaften Ausführungsform der Erfindung sind im Zwischenkreislauf das zweite Hochlastventil und in einer zweiten Umführungsleitung um das zweite Hochlastventil das zweite Schwachlastventil angeordnet, wobei ferner eine dritte Umführungsleitung um den zweiten Wärmeübertrager, gefolgt von einem statischen Mischer, im Zwischenkreislauf angeordnet ist, wobei das zweite Hochlastventil die Funktion eines Drei-Wege-Ventils erfüllt und ein Ausgang des zweiten Hochlastventils auf einen Eingang des zweiten Wärmeübertragers geschaltet ist und von einem weiteren Ausgang des zweiten Hochlastventils die dritte Umführungsleitung abzweigt. Das zweite Hochlastventil kann dabei tatsächlich ein Drei-Wege-Ventil sein, die Funktion eines Drei-Wege-Ventils kann aber auch durch zwei separate Regelventile, d.h. je ein Regelventil im heißen (also durch den zweiten Wärmeübertrager) und kalten (um den zweiten Wärmeübertrager herum) Fluid-Zweig, die gegenläufig verfahren werden, erfüllt werden.

Infolge der Parallelschaltung von zweitem Hochlast- und zweitem Schwachlastventil lässt sich wie bereits auf der Primärseite des zweiten Wärmeübertragers nun auch auf seiner Sekundärseite die Menge des den zweiten Wärmeübertrager durchströmenden Fluids genau einstellen. Mit der dritten Umführungsleitung wird sichergestellt, dass die im Zwischenkreislauf umlaufende Fluidmenge hierdurch nicht beeinflusst wird, sondern der verbleibende Rest einfach am zweiten Wärmeübertrager vorbei geleitet werden kann. Die infolge der Aufteilung der Fluidströme mitunter großen Unterschiede von Temperatur und Viskosität des Fluids im Zwischenkreislauf werden durch den statischen Mischer zu einem homogenen Niveau vermischt.

Es ist zweckmäßig, wenn die Kraftwerksanlage eine Einrichtung zur Regelung der ersten und zweiten Hochlast- und Schwachlastventile umfasst.

Schließlich ist es im Hinblick auf den Platzbedarf vorteilhaft, wenn der zweite Wärmeübertrager mindestens ein vollverschweißter Plattenwärmeübertrager ist. Dabei kann der zweite Wärmeübertrager durchaus aus zwei separaten, vollverschweißen Plattenwärmeübertragen bestehen, insbesondere dann, wenn einer der beiden mit einem Bypass versehen ist, so dass sich die übertragene Wärmemenge an das Kondensat und somit auch die Vorwärmung der Ansaugluft feiner einstellen lässt.

Die auf ein Verfahren zur Effizienzoptimierung und Betriebsbereichserweiterung einer Kraftwerksanlage gerichtete Aufgabe wird gelöst durch ein Verfahren, bei dem ein Fluid in einem Zwischenkreislauf geführt wird und dabei Wärme über einen ersten Wärmeübertrager an von der Gasturbine angesaugte Luft übertragen wird, wobei Wärme eines vorgewärmten Kondensats aus dem Abhitzedampferzeuger über einen zweiten Wärmeübertrager auf das Fluid übertragen wird, wobei das Kondensat je nach Wärmebedarf über ein erstes Hochlastventil oder ein zum ersten Hochlastventil parallel geschaltetes, für geringere Durchflüsse als das erste Hochlastventil ausgelegtes erstes Schwachlastventil geleitet wird. Hierdurch lässt sich auch bei kleinen Massenströmen die Temperatur des Kondensats, welches den zweiten Wärmeübertrager durchströmt, gut einstellen.

Im Hinblick auf die möglichst genaue Einstellbarkeit der benötigten Kondensattemperatur für den zweiten Wärmeübertrager ist es vorteilhaft, wenn zumindest ein Teil des Kondensats nach Abgabe von Wärme an das Fluid unter Umgehung einer Vorwärmung einem Strom an vorgewärmtem Kondensat zugemischt wird und das Gemisch dem zweiten Wärmeübertrager zugeführt wird.

Zumindest ähnliche Anforderungen an die Einstellbarkeit hinsichtlich Temperatur und Durchfluss gelten natürlich auch für das im Zwischenkreislauf umlaufende Fluid, weshalb es auch hier vorteilhaft ist, wenn das Fluid je nach Wärmebedarf über ein zweites Hochlastventil oder ein zum zweiten Hochlastventil parallel geschaltetes, für geringere Durchflüsse als das zweite Hochlastventil ausgelegtes zweites Schwachlastventil geleitet wird.

Es ist zweckmäßig, wenn als Regelgröße für einen Kondensatmassenstrom durch den zweiten Wärmeübertrager eine Aufheizspanne des Zwischenkreislaufs verwendet wird, d.h. der Temperaturunterschied des Fluids zwischen Eingang und Ausgang am zweiten Wärmeübertrager. Der Kondensatmassenstrom, welcher durch den kondensatbeheizten zweiten Wärmeübertrager fließt, wird somit entsprechend dem Wärmebedarf des Zwischenkreislaufs eingestellt. Hierdurch wird gewährleistet, dass die Massenströme des zu beheizenden und des heizenden Mediums stets in einem günstigen Verhältnis zueinander stehen, was sich positiv auf den Betrieb des zweiten Wärmeübertragers auswirkt. Diese Betriebsweise senkt das Risiko des Einfrierens von Kondensat und auch des Ausdampfens des Fluids, welches typischer Weise ein Wasser-/Glykolgemisch ist. Zudem wird hierdurch die Wasser-/ Glykol-Mischtemperaturregelung verbessert, da nun eine Verstellung des Stellglieds (Dreiwegeventil) um einen bestimmten Betrag eine konstante Temperaturänderung hervorruft, d.h. die Verstärkung ist nun konstant.

Als Regelgröße für einen Kondensatmassenstrom durch den zweiten Wärmeübertrager kann alternativ eine Ventilstellung des zweiten Hochlastventils verwendet werden.

Weiterhin ist es zweckmäßig, wenn ein Temperatursollwert für die Ansaugluft abhängig von einem Gasturbinenanteil an einem eingestellten Leistungssollwert der Kraftwerksanlage kontinuierlich angepasst wird. Da mit der Erfindung die Temperatur der Ansaugluft nun fein einstellbar ist, bietet es sich an, die Ansaugluft kontinuierlich auf ein anhand des akturellen Betriebszustands der Kraftwerksanlage berechnetes Optimum einzustellen.

Für den Fall, dass die am "kalten Ende" des Abhitzedampferzeugers verfügbare Wärmemenge für einen optimalen Betrieb der Ansaugluftvorwärmung nicht ausreicht, bestehen folgende vorteilhafte Möglichkeiten, um die für die Ansaugluftvorwärmung verfügbare Wärmeleistung zu erhöhen und damit den Betriebsbereich zu vergrößern:
Zum Einen kann eine Niederdruckstufe im Abhitzedampferzeuger angestaut werden, d.h. der Druck in der Niederdrucktrommel wird angehoben, um Wärme im Abhitzedampferzeuger zum Kondensatvorwärmer zu verschieben.

Zum Anderen kann bei Bedarf, ggf. auch zusätzlich zur Druckanstauung im Niederdruckbereich, ein Hochdruck-Vorwärmer-Bypass im Abhitzedampferzeuger stufenweise geöffnet werden, um Wärme zum Kondensatvorwärmer zu verschieben.

Durch die gestaffelten Maßnahmen zur Wärmebereitstellung am Kondensatvorwärmer, d.h. stufenweise Niederdrucktrommel-Druckanhebung, stufenweises Öffnen des Hochdruck-Vorwärmer-Bypasses, wird ein wirkungsgradoptimierter Betrieb erzielt. Es wird gerade so viel Wärme zum Kondensatvorwärmer verschoben, dass die theoretisch noch nutzbare Restwärme des in die Atmosphäre entweichenden Abgases auf ein Minimum reduziert wird.

Im Hinblick auf die Erweiterung des Betriebsbereiches der Kraftwerksanlage können die vorgenannten Maßnahmen zur Ansaugluftvorwärmung mit dem teilweisen Abschalten von Brennern der Gasturbine kombiniert werden, so dass es möglich ist, das Kraftwerk mit gutem Wirkungsgrad und einer vergleichsweise sehr niedrigen Leistung zu betreiben, wobei die Abgas-Emissionen im erlaubten Bereich bleiben.

Da das Abgas der Gasturbine mithilfe des Kondensatvorwärmers als Wärmequelle für die Ansaugluftvorwärmung auf den minimal zulässigen Grenzwert abgekühlt werden kann, ist der Wirkungsgrad des Konzepts nach der Erfindung deutlich besser als bei der bekannten Lösung aus dem Stand der Technik mit Dampf als Wärmequelle.

Bei neuartigen Gasturbinen ist es auch erforderlich bei sehr kalten Außentemperaturen kleine Ansaugluft-Vorwärm-Leistungen zu realisieren, wodurch sich eine Gefahr des Einfrierens auf der Kondensatseite ergeben kann, was durch die neue Erfindung gelöst wird.

Durch die Erfindung wird der Betriebsbereich für die Teillastwirkungsgradverbesserung vergrößert. Anstatt einen konstanten Temperatursollwert für die Ansaugluft bei Unterschreiten einer fest eingestellten Grenze des Leistungssollwerts vorzugeben, wird der Ansauglufttemperatursollwert abhängig vom eingestellten Leistungssollwert angepasst, so dass auch bei höheren Teillasten eine Wirkungsgradverbesserung erzielt wird, und die IGVs der Gasturbine nicht zu weit öffnen bzw. der eingestellte Leistungssollwert eingeregelt werden kann.

Der Vorteil der Erfindung liegt auch in einer weiter erhöhten Einsparung von fossilen Brennstoffen (Gas, Öl) in Teillasten eines Gas- und Dampf-Kraftwerks und damit verbundenen geringeren Betriebskosten und Emissionen sowie die Realsierung eines großen, flexiblen Anwendungsbereiches.

Die kontinuierliche Regelung und der Einsatz von vollverschweißten Plattenwärmetauschern (mit geringem Platzbedarf) tragen zu diesen Vorteilen bei.

Im Vergleich zur derzeitigen Standardlösung mit Dampf als Wärmequelle kann nun ein bisher nicht nutzbarer Teil der Wärmeenergie des Abgases aus der letzten Wärmetauscherfläche des Abhitzedampferzeugers noch im Teillastbetrieb des Gasturbinenkombikraftwerks zur Wirkungsgraderhöhung und zum Verhindern von Eisbildung im Winterbetrieb ausgenutzt werden. Bei gleichzeitiger Vorwärmung der Gasturbinenansaugluft mit heißem Kondensat als Wärmequelle kann der höherwertige Dampf aus der Niederdrucktrommel weiterhin in der Dampfturbine genutzt werden.

Durch die Regelung der Aufheizspanne über den kondensatbeheizten Wärmeübertrager wird ein für den Wärmeübertrager und die angrenzenden Rohrleitungen schonender Betrieb erzielt und das Risiko des Einfrierens des Wärmeübertragers deutlich reduziert. Ein zügiges und störungsfreies An- und Abfahren wird unterstützt und auch der Betrieb mit sehr geringem Wärmeeintrag kann mit gleichbleibender Regelgüte gewährleistet werden, was sich in Summe positiv auf die Verfügbarkeit des Gesamtsystems auswirkt.

Die geschäftlichen Auswirkungen sind eine verbesserte Wettbewerbssituation durch diese Möglichkeiten, sowohl für Neuanlagen als auch zur Nachrüstung für bestehende Gasturbinenkombikraftwerke, die häufig in Teillasten fahren und daher die Ersparnis an Brennstoffkosten gut ausnutzen können.

Falls ein schnelles Rampen des Blockleistungssollwerts erforderlich ist, kann der Ansauglufttemperatursollwert an Hand des aktuellen Leistungssollwerts so vorgegeben werden, dass beim Hochrampen auf Volllast die maximal zulässige Temperatur für ein Erreichen dieser Leistung nicht überschritten wird. Anstatt heißem Kondensat aus dem Kondensatvorwärmer kann das o.g. Konzept alternativ auch auf die Nutzung von Fernwärme oder einer anderen Warmwasser- Wärmequelle zurückgreifen oder auch in der Kombination beider Wärmequellen umgesetzt werden.

Die Erfindung wird beispielhaft anhand der Zeichnungen näher erläutert. Es zeigen schematisch und nicht maßstäblich:
- Figur 1: eine Kraftwerkanlage nach der Erfindung und
- Figur 2: eine Kraftwerkanlage nach der Erfindung mit verschiedenen Alternativen.

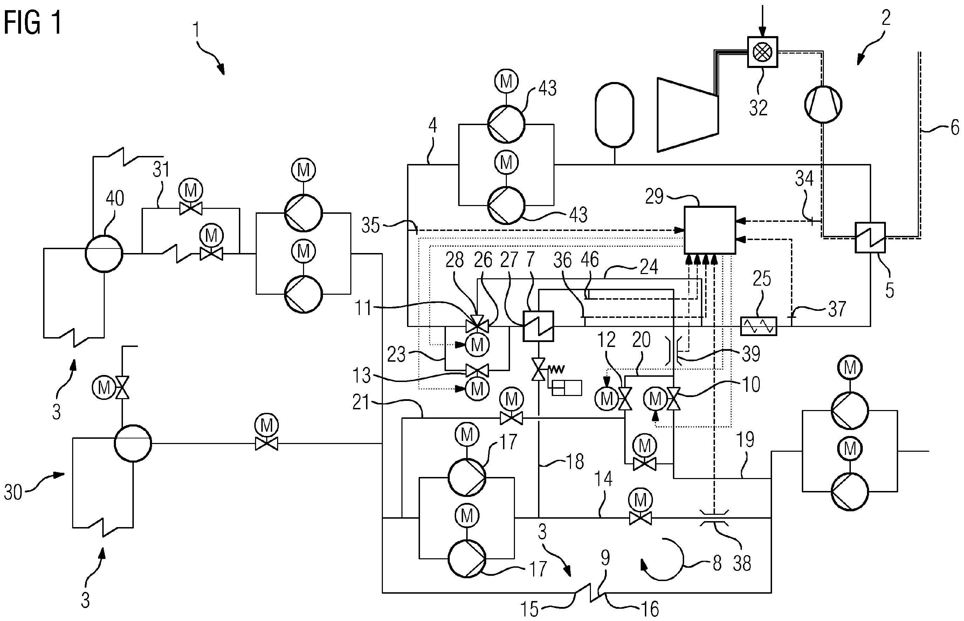

Die Figur 1 zeigt schematisch und beispielhaft eine Kraftwerksanlage 1 mit einer Gasturbine 2, sowie stark vereinfacht für die Erfindung relevante Komponenten eines Abhitzedampferzeugers 3. Die Vorwärmung der Ansaugluft der Gasturbine 2 erfolgt über einen Zwischenkreislauf 4 für ein Fluid, das als Wärmeträgermedium geeignet ist, beispielsweise ein Wasser/ Glykol-Gemisch, mit einem ersten Wärmeübertrager 5, der in einen Lufteinlass 6 der Gasturbine 2 geschaltet ist, und mit einem zweiten Wärmeübertrager 7, der als vollverschweißter Plattenwärmetauscher ausgeführt ist und in einen Kondensatkreislauf 8 geschaltet ist. Eine andere Art Wärmeübertrager ist natürlich ebenfalls möglich, beispielsweise ein Rohrbündelwärmetauscher. Der vollverschweißte Plattenwärmeübertrager bietet allerdings aufgrund seiner Kompaktheit Vorteile. Erfindungsgemäß sind auf beiden Seiten des zweiten Wärmeübertragers 7, d.h. sowohl auf der Primär- als auch auf der Sekundärseite, ein erstes 10 bzw. zweites Hochlastventil 11 und dazu parallel ein erstes 12 bzw. zweites Schwachlastventil 13 für geringere Durchflüsse als durch das erste 10 bzw. zweite Hochlastventil 11 angeordnet.

Der Kondensatkreislauf 8 umfasst einen Kondensatvorwärmer 9 im Abhitzedampferzeuger 3, sowie eine erste Rezirkulationsleitung 14, die einen Ausgang 15 des Kondensatvorwärmers 9 mit einem Eingang 16 des Kondensatvorwärmers 9 verbindet, wobei redundante Rezirkulationspumpen 17 in der ersten Rezirkulationsleitung 14 angeordnet sind. Der zweite Wärmeübertrager 7 wird in den Kondensatkreislauf 8 eingebunden, indem eine erste Zweigleitung 18 in Strömungsrichtung nach den Rezirkulationspumpen 17 von der ersten Rezirkulationsleitung 14 abzweigt und in den zweiten Wärmeübertrager 7 mündet und eine zweite Zweigleitung 19 den zweiten Wärmeübertrager 7 mit dem Eingang 16 des Kondensatvorwärmers 9 verbindet.

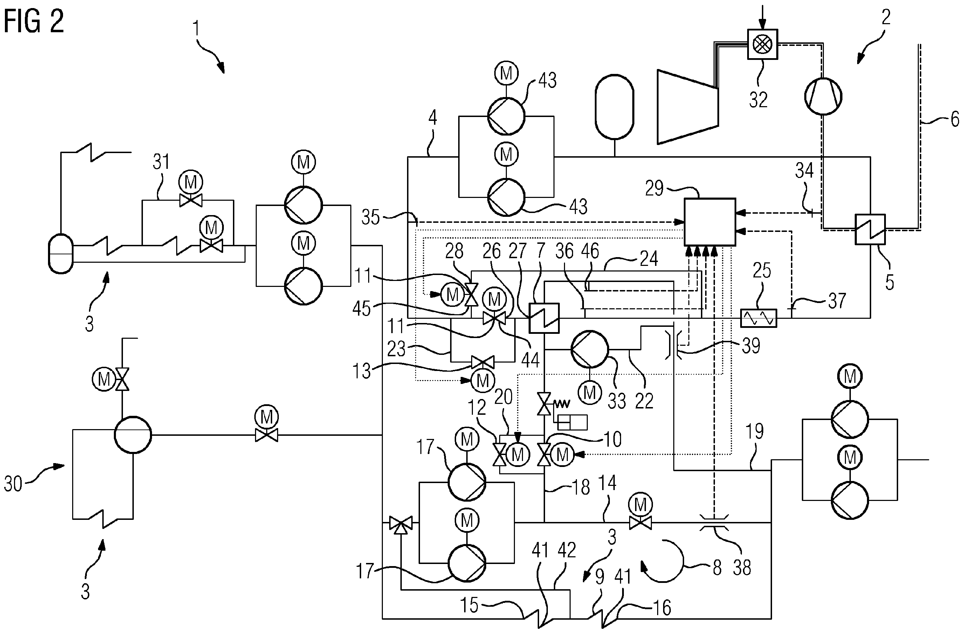

Das erste Hochlastventil 10 und das in einer ersten Umführungsleitung 20 um das erste Hochlastventil 10 angeordnete erste Schwachlastventil 12 können entweder gemeinsam in der ersten 18 (Figur 2) oder in der zweiten Zweigleitung 19 angeordnet sein (Figur 1).

Für die Rezirkulation eines im zweiten Wärmeübertrager 7 abgekühlten Kondensats ohne weitere Aufwärmung im Kondensatvorwärmer 9 bestehen verschiedene Möglichkeiten. Gemäß der Ausführungsform nach Figur 1, zweigt eine zweite Rezirkulationsleitung 21 von der ersten Umführungsleitung 20 ab und mündet in Strömungsrichtung eines Kondensats vor den redundanten Rezirkulationspumpen 17 in die erste Rezirkulationsleitung 14. Gemäß einer nicht gezeigten alternativen Ausführungsform zweigt die zweite Rezirkulationsleitung 21 direkt von der zweiten Zweigleitung 19 ab und mündet ebenfalls in Strömungsrichtung eines Kondensats vor den redundanten Rezirkulationspumpen 17 in die erste Rezirkulationsleitung 14. Der Unterschied zur ersten Ausführungsform besteht also nur in der Abzweigung aus der ersten Umführungsleitung 20 bzw. der zweiten Rezirkulationsleitung 21 infolge der Anordnung der ersten Hoch- 10 und Schwachlastventile 12 "hinter" bzw. "vor" dem zweiten Wärmeübertrager 7.

Schließlich zeigt die Figur 2 eine Ausführungsform, bei der das abgekühlte Kondensat nicht vor den redundanten Rezirkulationspumpen 17 zurückgespeist wird, sondern bei der von der zweiten Zweigleitung 19 eine dritte Rezirkulationsleitung 22 unmittelbar in die erste Zweigleitung 18 mündet. In diesem Fall ist aber eine Pumpe 33 in der dritten Rezirkulationsleitung 22 erforderlich.

Zusätzlich zum ersten Wärmeübertrager 5 und zum zweiten Wärmeübertrager 7 sind im Zwischenkreislauf 4 das zweite Hochlastventil 11 und in einer zweiten Umführungsleitung 23 um das zweite Hochlastventil 11 das zweite Schwachlastventil 13 angeordnet. Ferner ist eine dritte Umführungsleitung 24 um den zweiten Wärmeübertrager 7, gefolgt von einem statischen Mischer 25, im Zwischenkreislauf 4 angeordnet. Das zweite Hochlastventil 11 ist in der Figur 1 als ein Drei-Wege-Ventil ausgeführt und ein Ausgang 26 des zweiten Hochlastventils 11 ist auf einen Eingang 27 des zweiten Wärmeübertragers 7 geschaltet und von einem weiteren Ausgang 28 des zweiten Hochlastventils 11 zweigt die dritte Umführungsleitung 24 ab. Die Figur 2 zeigt eine alternative Ausführung mit zwei separaten Regelventilen 44, 45, d.h. ein Regelventil 44 im heißen (also durch den zweiten Wärmeübertrager 7) und ein Regelventil 45 im kalten (um den zweiten Wärmeübertrager herum) Fluid-Zweig, die gegenläufig verfahren werden.

Die Figur 1 zeigt ferner eine Einrichtung 29 zur Regelung der ersten und zweiten Hochlast- 10, 11 und Schwachlastventile 12, 13. Die Regelung erfolgt dabei unter anderem auf Grundlage von an verschiedenen Stellen gemessenen Temperaturen bzw. Durchflüssen. Die Kraftwerksanlage 1 umfasst zu diesem Zweck eine Temperaturmessstelle 34 für die vorgewärmte Ansaugluft und Temperaturmessstellen 35, 36 und 37 für das Fluid im Zwischenkreislauf. Die Temperaturmessstelle 35 ist in den Figuren 1 und 2 zwischen den Rezirkulationspumpen 43 im Zwischenkreislauf 4 und einem Abzweig zur zweiten Umführungsleitung 23 angeordnet, sie kann aber auch bereits vor den Rezirkulationspumpen 43 im Zwischenkreislauf angeordnet sein und liefert die Temperatur des Fluids vor dem zweiten Wärmeübertrager 7. Die Temperaturmessstelle 36 ist unmittelbar hinter dem zweiten Wärmeübertrager 7 angeordnet und liefert die Temperatur des Fluids nach dem Wärmetausch mit dem Kondensat. Die Differenz der gemessenen Werte der Temperaturmessstellen 35 und 36 wird als Aufheizspanne bezeichnet. Schließlich wird mit der Temperaturmessstelle 37 die Mischtemperatur des Fluids bestimmt, d.h. die Temperatur die durch Mischen der Fluidströme durch den zweiten Wärmeübertrager 7 bzw. an ihm vorbei entsteht und mit der der erste Wärmeübertrager 5 zur Aufwärmung der Gasturbinenansaugluft beaufschlagt wird. Durchflussmessstellen 38, 39 für das Kondensat sind in den Figuren in der zweiten Zweigleitung 19 sowie in der ersten Rezirkulationsleitung 14 angeordnet. Die Darstellung der Regelung in den Figuren ist stark vereinfacht. Die tatsächliche Regelung ist komplexer und umfasst neben vielen weiteren Aspekten selbstverständlich auch eine Regelung der Rezirkulationspumpen 17 in der ersten Rezirkulationsleitung 14. Die Regelung muss auch nicht für alle Komponenten zentral, wie in den Figuren gezeigt, erfolgen.

Ist die Wärmemenge im Bereich des Kondensatvorwärmers 9 für die Ansaugluftvorwärmung nicht mehr ausreichend, so kann eine Niederdruckstufe 30 im Abhitzedampferzeuger 3 angestaut werden, um Wärme im Abhitzedampferzeuger 3 zum Kondensatvorwärmer 9 zu verschieben.

Sollte diese Maßnahme immer noch nicht genügen, kann in einem weiteren Schritt ein Hochdruck-Vorwärmer-Bypass 31 im Abhitzedampferzeuger 3 geöffnet werden, um noch mehr Wärme zum Kondensatvorwärmer 9 zu verschieben. Dies funktioniert sowohl für Hochdruckbereiche mit Hochdrucktrommel 40, wie in Figur 1 gezeigt, als auch bei der in Figur 2 gezeigten Benson-Variante.

Ebenfalls in Figur 2 gezeigt ist eine Variante des Kondensatvorwärmers 9 mit geteilten Heizflächen 41, von denen eine einen Bypass 42 aufweist, so dass die auf das Kondensat übertragene Wärmemenge besser einstellbar ist.

## Patentansprüche

1. Kraftwerksanlage (1) umfassend eine Gasturbine (2), einen Abhitzedampferzeuger (3), sowie einen Zwischenkreislauf (4) mit einem ersten Wärmeübertrager (5), der in einen Lufteinlass (6) der Gasturbine (2) geschaltet ist, und einem zweiten Wärmeübertrager (7), der in einen Kondensatkreislauf (8) geschaltet ist, der einen Kondensatvorwärmer (9) im Abhitzedampferzeuger (3) umfasst, **dadurch gekennzeichnet, dass** auf beiden Seiten des zweiten Wärmeübertragers (7) ein erstes (10) bzw. zweites Hochlastventil (11) und dazu parallel ein erstes (12) bzw. zweites Schwachlastventil (13) für geringere Durchflüsse als durch das erste (10) bzw. zweite Hochlastventil (11) angeordnet sind.

2. Kraftwerksanlage (1) nach Anspruch 1, wobei der Kondensatkreislauf (8) eine erste Rezirkulationsleitung (14) umfasst, die einen Ausgang (15) des Kondensatvorwärmers (9) mit einem Eingang (16) des Kondensatvorwärmers (9) verbindet, wobei redundante Rezirkulationspumpen (17) in der ersten Rezirkulationsleitung (14) angeordnet sind und wobei eine erste Zweigleitung (18) von der ersten Rezirkulationsleitung (14) abzweigt und in den zweiten Wärmeübertrager (7) mündet und eine zweite Zweigleitung (19) den zweiten Wärmeübertrager (7) mit dem Eingang (16) des Kondensatvorwärmers (9) verbindet.

3. Kraftwerksanlage (1) nach Anspruch 2, wobei die erste Zweigleitung (18) in Strömungsrichtung nach den Rezirkulationspumpen (17) von der ersten Rezirkulationsleitung (14) abzweigt.

4. Kraftwerksanlage (1) nach Anspruch 2, wobei in der ersten Zweigleitung (18) das erste Hochlastventil (10) und in einer ersten Umführungsleitung (20) um das erste Hochlastventil (10) das erste Schwachlastventil (12) angeordnet sind.

5. Kraftwerksanlage (1) nach Anspruch 2, wobei in der zweiten Zweigleitung (19) das erste Hochlastventil (10) und in einer ersten Umführungsleitung (20) um das erste Hochlastventil (10) das erste Schwachlastventil (12) angeordnet sind.

6. Kraftwerksanlage (1) nach Anspruch 4, wobei von der zweiten Zweigleitung (19) eine zweite Rezirkulationsleitung (21) abzweigt, die in Strömungsrichtung eines Kondensats vor den redundanten Rezirkulationspumpen (17) in die erste Rezirkulationsleitung (14) mündet.

7. Kraftwerksanlage (1) nach Anspruch 5, wobei von der ersten Umführungsleitung (20) eine zweite Rezirkulationsleitung (21) abzweigt, die in Strömungsrichtung eines Kondensats vor den redundanten Rezirkulationspumpen (17) in die erste Rezirkulationsleitung (14) mündet.

8. Kraftwerkanlage (1) nach den Ansprüchen 2 bis 5, wobei von der zweiten Zweigleitung (19) eine dritte Rezirkulationsleitung (22) in die erste Zweigleitung (18) mündet und eine Pumpe (33) in die dritte Rezirkulationsleitung (22) geschaltet ist.

9. Kraftwerksanlage (1) nach den Ansprüchen 2 bis 5, wobei der Kondensatvorwärmer (9) mindestens zwei Heizflächen (41) aufweist, von denen mindestens eine einen Bypass (42) aufweist.

10. Kraftwerksanlage (1) nach einem der vorhergehenden Ansprüche, wobei im Zwischenkreislauf (4) das zweite Hochlastventil (11) und in einer zweiten Umführungsleitung (23) um das zweite Hochlastventil (11) das zweite Schwachlastventil (13) angeordnet sind, wobei ferner eine dritte Umführungsleitung (24) um den zweiten Wärmeübertrager (7), gefolgt von einem statischen Mischer (25), im Zwischenkreislauf (4) angeordnet ist, wobei das zweite Hochlastventil (11) die Funktion eines Drei-Wege-Ventils erfüllt und ein Ausgang (26) des zweiten Hochlastventils (11) auf einen Eingang (27) des zweiten Wärmeübertragers (7) geschaltet ist und von einem weiteren Ausgang (28) des zweiten Hochlastventils (11) die dritte Umführungsleitung (24) abzweigt.

11. Kraftwerksanlage (1) nach einem der vorhergehenden Ansprüche, umfassend eine Einrichtung (29) zur Regelung der ersten und zweiten Hochlast-(10, 11) und Schwachlastventile (12, 13).

12. Kraftwerksanlage (1) nach einem der vorhergehenden Ansprüche, wobei der zweite Wärmeübertrager (7) mindestens ein vollverschweißter Plattenwärmeübertrager ist.

13. Verfahren zur Effizienzoptimierung und Betriebsbereichserweiterung einer Kraftwerksanlage (1), die Kraftwerksanlage (1) umfassend eine Gasturbine (2) und einen Abhitzedampferzeuger (3), bei dem ein Fluid in einem Zwischenkreislauf (4) geführt wird und dabei Wärme über einen ersten Wärmeübertrager (5) an von der Gasturbine (2) angesaugte Luft übertragen wird, wobei Wärme eines vorgewärmten Kondensats aus dem Abhitzedampferzeuger (3) über einen zweiten Wärmeübertrager (7) auf das Fluid übertragen wird, **dadurch gekennzeichnet, dass** das Kondensat je nach Wärmebedarf über ein erstes Hochlastventil (10) oder ein zum ersten Hochlastventil (10) parallel geschaltetes, für geringere Durchflüsse als das erste Hochlastventil (10) ausgelegtes erstes Schwachlastventil (12) geleitet wird.

14. Verfahren nach Anspruch 13, wobei zumindest ein Teil des Kondensats nach Abgabe von Wärme an das Fluid unter Umgehung einer Vorwärmung einem Strom an vorgewärmtem Kondensat zugemischt wird und das Gemisch dem zweiten Wärmeübertrager (7) zugeführt wird.

15. Verfahren nach einem der Ansprüche 13 oder 14, wobei das Fluid je nach Wärmebedarf über ein zweites Hochlastventil (11) oder ein zum zweiten Hochlastventil (11) parallel geschaltetes, für geringere Durchflüsse als das zweite Hochlastventil (11) ausgelegtes zweites Schwachlastventil (13) geleitet wird.

16. Verfahren nach einem der Ansprüche 13 bis 15, wobei als Regelgröße für einen Kondensatmassenstrom durch den zweiten Wärmeübertrager (7) eine Aufheizspanne des Zwischenkreislaufs (4) verwendet wird.

17. Verfahren nach Anspruch 15, wobei als Regelgröße für einen Kondensatmassenstrom durch den zweiten Wärmeübertrager (5) eine Ventilstellung des zweiten Hochlastventils (11) verwendet wird.

18. Verfahren nach einem der Ansprüche 13 bis 17, wobei ein Temperatursollwert für die Ansaugluft abhängig von einem Gasturbinenanteil an einem eingestellten Leistungssollwert der Kraftwerksanlage (1) kontinuierlich angepasst wird.

19. Verfahren nach einem der Ansprüche 13 bis 18, wobei eine Niederdruckstufe (30) im Abhitzedampferzeuger (3) angestaut wird, um Wärme im Abhitzedampferzeuger (3) zum Kondensatvorwärmer (9) zu verschieben.

20. Verfahren nach einem der Ansprüche 13 bis 19, wobei ein Hochdruck-Vorwärmer-Bypass (31) im Abhitzedampferzeuger (3) geöffnet wird, um Wärme zum Kondensatvorwärmer (9) zu verschieben.

21. Verfahren nach einem der Ansprüche 13 bis 20, wobei Brenner (32) der Gasturbine (2) teilweise abgeschaltet werden.

## Claims

1. Power plant (1) comprising a gas turbine (2), a heat recovery steam generator (3), and an intermediate circuit (4) with a first heat exchanger (5), which is connected into an air inlet (6) of the gas turbine (2), and a second heat exchanger (7), which is connected into a condensate circuit (8) and comprises a condensate preheater (9) in the heat recovery steam generator (3), **characterized in that** a first high-load valve (10) and second high-load valve (11) and, parallel thereto, a first low-load valve (12) and second low-load valve (13), for smaller throughflows than through the first high-load valve (10) and second high-load valve (11), are arranged on both sides of the second heat exchanger (7).

2. Power plant (1) according to Claim 1, wherein the condensate circuit (8) comprises a first recirculation line (14) which connects an outlet (15) of the condensate preheater (9) to an inlet (16) of the condensate preheater (9), wherein redundant recirculation pumps (17) are arranged in the first recirculation line (14) and wherein a first branch line (18) branches from the first recirculation line (14) and opens into the second heat exchanger (7) and a second branch line (19) connects the second heat exchanger (7) to the inlet (16) of the condensate preheater (9) .

3. Power plant (1) according to Claim 2, wherein the first branch line (18) branches from the first recirculation line (14) downstream of the recirculation pumps (17) in the flow direction.

4. Power plant (1) according to Claim 2, wherein the first high-load valve (10) is arranged in the first branch line (18) and the first low-load valve (12) is arranged in a first bypass line (20) around the first high-load valve (10).

5. Power plant (1) according to Claim 2, wherein the first high-load valve (10) is arranged in the second branch line (19) and the first low-load valve (12) is arranged in a first bypass line (20) around the first high-load valve (10).

6. Power plant (1) according to Claim 4, wherein a second recirculation line (21) branches from the second branch line (19) and opens into the first recirculation line (14) upstream of the redundant recirculation pumps (17) in the flow direction of a condensate.

7. Power plant (1) according to Claim 5, wherein a second recirculation line (21) branches from the first bypass line (20) and opens into the first recirculation line (14) upstream of the redundant recirculation pumps (17) in the flow direction of a condensate.

8. Power plant (1) according to Claims 2 to 5, wherein a third recirculation line (22) leads from the second branch line (19) into the first branch line (18) and a pump (33) is connected into the third recirculation line (22).

9. Power plant (1) according to Claims 2 to 5, wherein the condensate preheater (9) has at least two heating surfaces (41) of which at least one has a bypass (42).

10. Power plant (1) according to one of the preceding claims, wherein the second high-load valve (11) is arranged in the intermediate circuit (4) and the second low-load valve (13) is arranged in a second bypass line (23) around the second high-load valve (11), wherein a third bypass line (24) around the second heat exchanger (7), followed by a static mixer (25), is also arranged in the intermediate circuit (4), wherein the second high-load valve (11) fulfills the function of a three-way valve and an outlet (26) of the second high-load valve (11) is connected to an inlet (27) of the second heat exchanger (7) and the third bypass line (24) branches from a further outlet (28) of the second high-load valve (11).

11. Power plant (1) according to one of the preceding claims, comprising a device (29) for controlling the first and second high-load valves (10, 11) and first and second low-load valves (12, 13).

12. Power plant (1) according to one of the preceding claims, wherein the second heat exchanger (7) is at least one fully-welded plate heat exchanger.

13. Method for efficiency optimization and operating range extension of a power plant (1), the power plant (1) comprising a gas turbine (2) and a heat recovery steam generator (3), in which a fluid is conducted in an intermediate circuit (4) and in the process heat is transferred via a first heat exchanger (5) to air which is inducted by the gas turbine (2), wherein heat of a preheated condensate from the heat recovery steam generator (3) is transferred via a second heat exchanger (7) to the fluid, **characterized in that** depending on heat demand the condensate is directed via a first high-load valve (10) or via a first low-load valve (12) which is connected in parallel to the first high-load valve (10) and designed for smaller throughflows than the first high-load valve (10).

14. Method according to Claim 13, wherein at least some of the condensate, after yielding heat to the fluid, bypassing a preheating, is admixed with a flow of preheated condensate and the mixture is fed to the second heat exchanger (7).

15. Method according to either of Claims 13 and 14, wherein depending on heat demand the fluid is directed via a second high-load valve (11) or via a second low-load valve (13) which is connected in parallel to the second high-load valve (11) and designed for smaller throughflows than the second high-load valve (11) .

16. Method according to one of Claims 13 to 15, wherein a heating margin of the intermediate circuit (4) is used as a control variable for a condensate mass flow through the second heat exchanger (7).

17. Method according to Claim 15, wherein a valve position of the second high-load valve (11) is used as a control variable for a condensate mass flow through the second heat exchanger (5) .

18. Method according to one of Claims 13 to 17, wherein a temperature setpoint value for the intake air is continuously adjusted in dependence on a gas turbine proportion of an established power setpoint value of the power plant (1).

19. Method according to one of Claims 13 to 18, wherein a low-pressure stage (30) is banked up in the heat recovery steam generator (3) in order to shift heat in the heat recovery steam generator (3) to the condensate preheater (9).

20. Method according to one of Claims 13 to 19, wherein a highpressure preheater bypass (31) in the heat recovery steam generator (3) is opened in order to shift heat to the condensate preheater (9).

21. Method according to one of Claims 13 to 20, wherein burners (32) of the gas turbine (2) are partially shut down.

## Revendications

1. Centrale (1) électrique, comprenant une turbine (2) à gaz, un générateur (3) de vapeur à récupération de la chaleur perdue, ainsi qu'un circuit (4) intermédiaire, comprenant un premier échangeur de chaleur (5) monté dans une admission (6) d'air de la turbine (2) à gaz et un deuxième échangeur de chaleur (7) monté dans un circuit (8) de condensat, qui comprend un préchauffeur (9) de condensat dans le générateur (3) de vapeur à récupération de la chaleur perdue, **caractérisé en ce que**, des deux côtés du deuxième échangeur de chaleur (7), sont montées une première (10) et une deuxième vannes (11) de grande charge et, parallèlement à cela, une première (12) et une deuxième vannes (13) de charge faible pour des débits plus petits que dans la première (10) et la deuxième vannes (11) de grande charge.

2. Centrale (1) électrique suivant la revendication 1, dans laquelle le circuit (8) de condensat comprend un premier conduit (14) de recirculation, qui met une sortie (15) du préchauffeur (9) de condensat en communication avec une entrée (16) du préchauffeur (9) de condensat, des pompes (17) redondantes de recirculation étant montées dans le premier conduit (14) de recirculation et un premier conduit (18) de bifurcation bifurquant du premier conduit (14) de recirculation et débouchant dans le deuxième échangeur de chaleur (7) et un deuxième conduit (19) de bifurcation mettant le deuxième échangeur de chaleur (7) en communication avec l'entrée (16) du préchauffeur (9) de condensat.

3. Centrale (1) électrique suivant la revendication 2, dans laquelle le premier conduit (18) de bifurcation bifurque du premier conduit (14) de recirculation, dans le sens d'écoulement, après les pompes (17) de recirculation.

4. Centrale (1) électrique suivant la revendication 2, dans laquelle la première vanne (10) de grande charge est montée dans le premier conduit (18) de bifurcation et la première vanne (12) de charge faible est montée dans un premier conduit (20) de contournement de la première vanne (10) de grande charge.

5. Centrale (1) électrique suivant la revendication 2, dans laquelle la première vanne (10) de grande charge est montée dans le deuxième conduit (19) de bifurcation et la première vanne (12) de charge faible est montée dans un premier conduit (20) de contournement de la première vanne (10) de grande charge.

6. Centrale (1) électrique suivant la revendication 4, dans laquelle, du deuxième conduit (19) de bifurcation bifurque un deuxième conduit (21) de recirculation, qui débouche dans le premier conduit (14) de recirculation, dans le sens d'écoulement d'un condensat, avant les pompes (17) redondantes de recirculation.

7. Centrale (1) électrique suivant la revendication 5, dans lequel, du premier conduit (20) de contournement bifurque un deuxième conduit (21) de recirculation, qui débouche dans le premier conduit (14) de recirculation, dans le sens d'écoulement d'un condensat, avant les pompes (17) redondantes de recirculation.

8. Centrale (1) électrique suivant les revendications 2 à 5, dans lequel, du deuxième conduit (19) de bifurcation, un troisième conduit (22) de recirculation débouche dans le premier conduit (18) de bifurcation et une pompe (33) est montée dans le troisième conduit (22) de recirculation.

9. Centrale (1) électrique suivant les revendications 2 à 5, dans laquelle le préchauffeur (9) de condensat a au moins deux surfaces (41) de chauffe, dont l'une au moins a une dérivation (42).

10. Centrale (1) électrique suivant l'une des revendications précédentes, dans laquelle la deuxième vanne (11) de grande charge est montée dans le circuit (4) intermédiaire et la deuxième vanne (13) de charge faible est montée dans un deuxième conduit (23) de contournement de la deuxième vanne (11) de grande charge, dans laquelle, en outre, un troisième conduit (24) de contournement du deuxième échangeur de chaleur (7), suivi d'un mélangeur (25) statique, est monté dans le circuit (4) intermédiaire, la deuxième vanne (11) de grande charge assumant la fonction d'une vanne à trois voies et une sortie (26) de la deuxième vanne (11) de grande charge est branchée sur une entrée (27) du deuxième échangeur de chaleur (7) et le troisième conduit (24) de contournement bifurque d'une autre sortie (28) de la deuxième vanne (11) de grande charge.

11. Centrale (1) électrique suivant l'une des revendications précédentes, comprenant un dispositif (29) de régulation des première et deuxième vannes de grande charge (10, 11) et de faible charge (12, 13).

12. Centrale (1) électrique suivant l'une des revendications précédentes, dans laquelle le deuxième échangeur de chaleur (7) est au moins un échangeur de chaleur à plaque soudé complètement.

13. Procédé d'optimisation de l'efficacité et d'agrandissement de la plage de fonctionnement d'une centrale (1) électrique, la centrale (1) électrique comprenant une turbine (2) à gaz et un générateur (3) de vapeur à récupération de la chaleur perdue, dans lequel on fait passer un fluide dans un circuit (4) intermédiaire et on transmet ainsi de la chaleur par un premier échangeur de chaleur (5) à de l'air aspiré par la turbine (2) à gaz, de la chaleur d'un condensat préchauffé provenant du générateur (3) de vapeur à récupération de la chaleur perdue étant transmise au fluide par un deuxième échangeur de chaleur (7), **caractérisé en ce que** l'on fait passer le condensat, suivant les besoins en chaleur, par une première vanne (10) de grande charge ou par une première vanne (12) de charge faible montée en parallèle à la première vanne (10) de grande charge et conçue pour des débits plus petits que la première vanne (10) de grande charge.

14. Procédé suivant la revendication 13, dans lequel on mélange, à un courant de condensat préchauffé, au moins une partie du condensat, après cession de chaleur au fluide avec contournement d'un préchauffage et on envoie le mélange au deuxième échangeur de chaleur (7).

15. Procédé suivant l'une des revendication 13 ou 14, dans lequel on fait passer le fluide, suivant les besoins en chaleur, par une deuxième vanne (11) de grande charge ou par une deuxième vanne (13) de charge faible montée en parallèle à la deuxième vanne (11) de grande charge et conçue pour des débits plus petits que la deuxième vanne (11) de grande charge.

16. Procédé suivant l'une des revendications 13 à 15, dans lequel on utilise, comme grandeur de réglage d'un courant massique de condensat, dans le deuxième échangeur de chaleur (7), une marge de chauffage du circuit (4) intermédiaire.

17. Procédé suivant la revendication 15, dans lequel on utilise, comme grandeur de réglage d'un courant massique de condensat, dans le deuxième échangeur de chaleur (5), une position de la deuxième vanne (11) de grande charge.

18. Procédé suivant l'une des revendications 13 à 17, dans lequel on adapte en continu une valeur de consigne de température de l'air aspiré en fonction d'une proportion de turbine à gaz à une valeur de consigne de puissance établie de la centrale (1) électrique.

19. Procédé suivant l'une des revendications 13 à 18, dans lequel on adjoint un étage (30) de basse pression au générateur (3) de vapeur à récupération de la chaleur perdue pour déplacer de la chaleur du générateur (3) de valeur à récupération de la chaleur perdue au préchauffeur (9) de condensat.

20. Procédé suivant l'une des revendications 13 à 19, dans lequel on ouvre une dérivation (31) de préchauffeur de haute de pression dans le générateur (3) de vapeur à récupération de la chaleur perdue, pour déplacer de la vapeur vers le préchauffeur (9) de condensat.

21. Procédé suivant l'une des revendications 13 à 20, dans lequel on arrête en partie le brûleur (32) de la turbine (2) à gaz.
